# EUROPEAN PATENT SPECIFICATION

(11) **EP 2 602 684 B1**
(45) Date of publication and mention of the grant of the patent: **20.02.2019**
(21) Application number: 11192554.1
(22) Date of filing: 08.12.2011
(51) Int. Cl.: G05D 23/02

(54) **Regulation valve**
Regelungsventil
Vanne de régulation

(43) Date of publication of application: 12.06.2013
(73) Proprietor: Honeywell Technologies Sarl, 1180 Rolle (CH)
(72) Inventor: Weidner, Kurt, 73434 Aalen (DE); Opitz, Michael, 74834 Elztal-Auerbach (DE); Klepsa, Martin, 61200 Brno (CZ); Grumpe, Volker, 74842 Billigheim (DE)
(74) Representative: Sturm, Christoph

(56) References cited:
- US-A- 3 366 128
- US-A1- 2007 075 152
- US-A1- 2008 223 316

## Description

The invention relates to a regulation valve for a liquid like water, especially to a drinking water regulation valve for a drinking water circulation system.

In drinking water circulation systems it is necessary to provide a defined temperature of the drinking water circulated by the drinking water circulation system. A drinking water regulation valve used in such a drinking water circulation system needs to provide an accurate regulation of the flow rate of the drinking water through the drinking water regulation valve depending on the temperature of the drinking water, especially at relative high temperatures of the drinking water at which an accurate relative low flow rate of the drinking water through the control valve has to be provided. Similar requirements have to be fulfilled by regulation valves for circulation systems of other liquid mediums.

US 2007/075152 A1 discloses a regulation valve according to the preamble of claim 1.

Other prior art valves are known from WO 2006/076732 A1 and from US 3 366 128 A.

Against this background, a novel regulation valve is provided which provides an accurate regulation of the flow rate of the liquid medium through the regulation valve depending on the temperature of the liquid medium, especially at relative high temperatures of the liquid medium at which an accurate relative low flow rate of the liquid medium through the control valve has to be provided.

The regulation valve according to the present invention is defined by claim 1.

The invention provides a regulation valve providing an accurate regulation of the flow rate of the liquid medium through the regulation valve depending on the temperature of the liquid medium, especially at relative high temperatures of the liquid medium at which an accurate relative low flow rate of the liquid medium through the control valve has to be provided.

Due to the features that the second spring element is positioned in the first valve inlet sub-chamber and that the second spring element acts on the mounting support in such a way that the second spring element provides a second spring force which presses the mounting support against a stroke provided by the housing, the operating pressure of the regulation valve needs not to be taken in consideration for sizing the second spring element. The second spring element does not need to act on the valve body against the thermo element force and the operating pressure. This makes it possible to use an inexpensive second spring element having a large tolerance with respect to the second spring force provided by the same. A further advantage of these features is that the valve body of the valve insert does not move during operation of the regulation valve so that there is no risk that the same becomes blocked by containments of the liquid medium. A further advantage of these features is that the entire valve insert can easily be removed from the valve housing for service or replacement purposes.

The inner main section of the valve housing including the valve body, the first spring element, the second spring element and the subassembly comprising the mounting support, the thermo element and the valve plunger can be removed from the outer connection section of the valve housing like a cartridge.

According to a preferred embodiment of the of the invention, said thermo element acts together with the valve plunger and the first spring element in such a way that at relative low temperatures of the liquid medium the valve plunger is lifted up from the valve seat by the first spring force being larger than the thermo element force thereby providing a relative high flow rate of the liquid medium through the control valve, and that at relative high temperatures of the liquid medium the valve plunger is pressed against the valve seat by the thermo element force being larger than the first spring force thereby providing a relative low flow rate of the liquid medium through the control valve.

According to another preferred embodiment of the invention, said valve body provides at least one relative large opening being surrounded by said valve seat which is opened when said valve plunger is lifted up from said valve seat at relative low temperatures of the liquid medium thereby providing the relative high flow rate and which is completely closed when said valve plunger is pressed against said valve seat at relative high temperatures of the liquid medium, whereby said valve body provides by at least one additional, relative small opening within the valve body being not surrounded by said valve seat which is also opened when said valve plunger is pressed against said valve seat thereby providing a highly accurate relative low flow rate.

Preferred developments of the invention are provided by the dependent claims and the description which follows. Exemplary embodiments are explained in more detail on the basis of the drawing, in which:
- Figure 1: shows a cross sectional view through a regulation valve according to a first embodiment of the invention;
- Figures 2a and 2b: each show a detail of the regulation valve of Figure 1;
- Figures 3a and 3b: each show an alternative for the detail according to Figures 2a and 2b;
- Figure 4: shows another detail of the regulation valve of Figure 1;
- Figure 5: shows a detail of Figure 4;
- Figure 6: shows a detail of Figure 5;
- Figure 7: shows an alternative for the detail according to Figure 6;
- Figure 8: shows a cross sectional view through a regulation valve according to a second embodiment of the invention;
- Figures 9a and 9b: each show details of the regulation valve according to Figure 8; and
- Figure 10: shows the regulation valve of Figure 8 in a partly assembled status.

The invention relates to a regulation valve for a liquid medium like water, especially to a drinking water regulation valve for a drinking water circulation system.

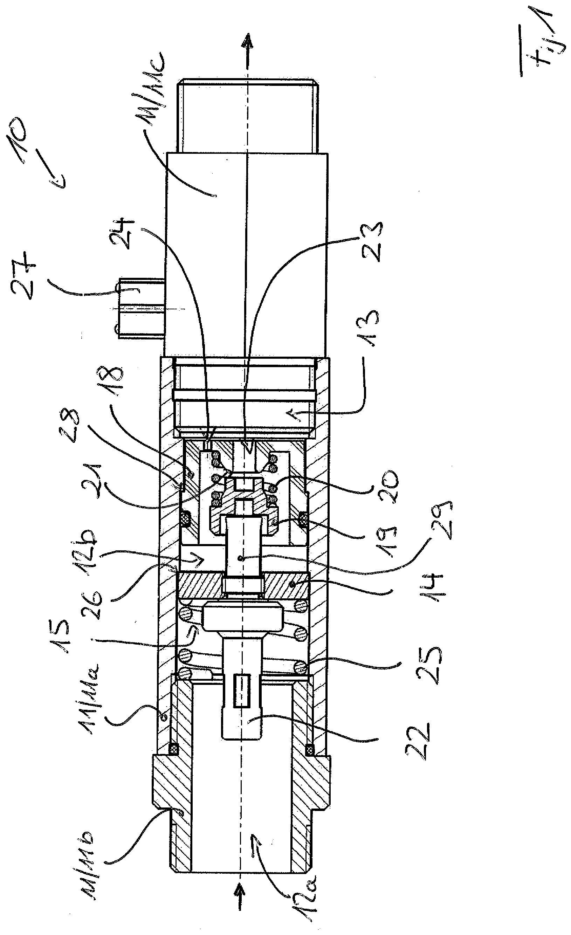

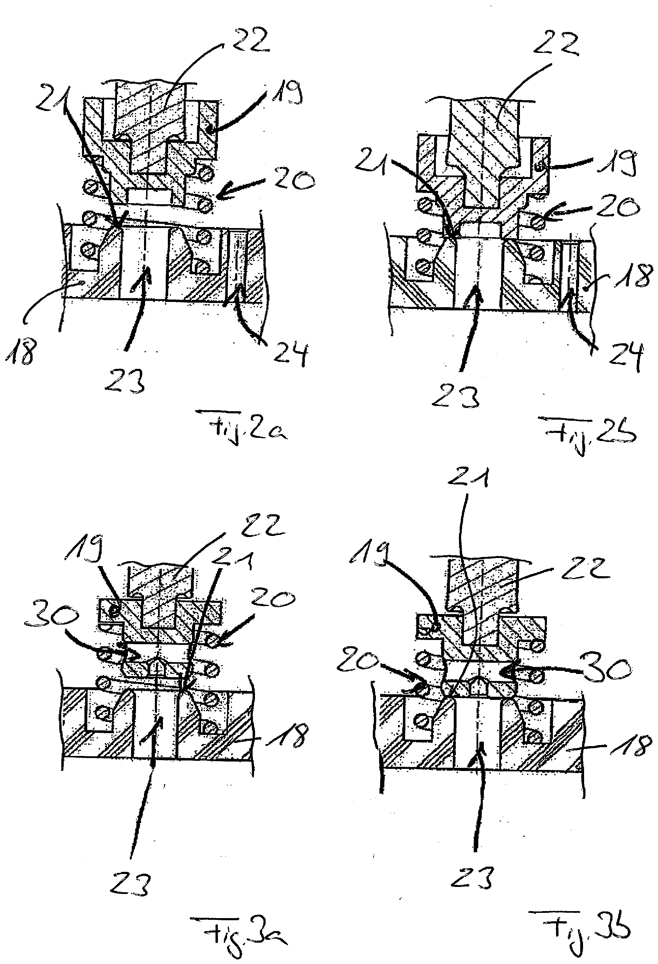

Figure 1 shows a cross sectional view of a regulation valve 10 according to a first preferred embodiment of the invention, whereby Figures 2a, 2b, Figures 3a, 3b and Figures 4-7 each show details of said regulation valve 10. The regulation valve 10 is preferably used for over plastering applications in a horizontal installation direction.

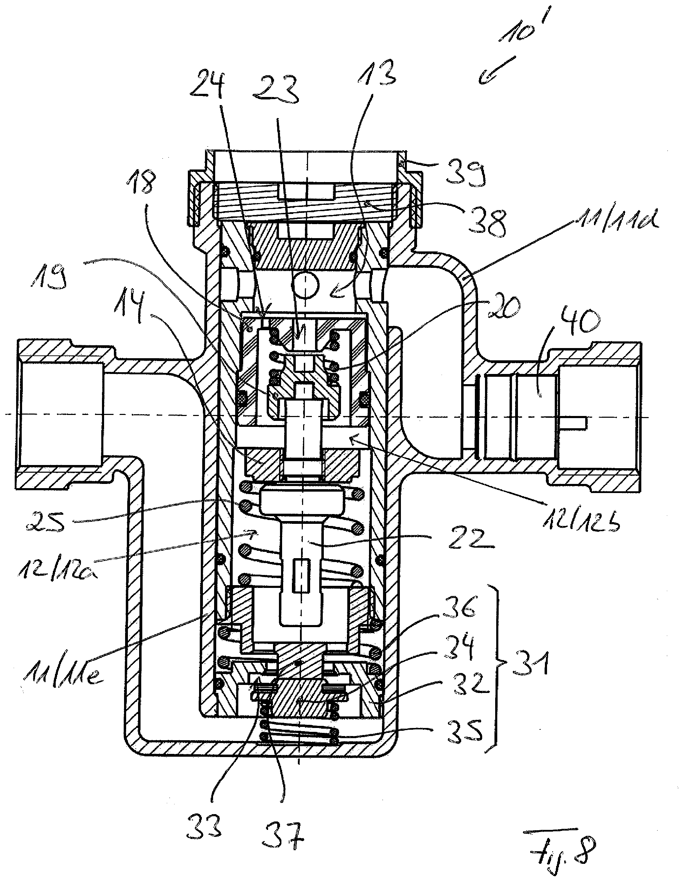

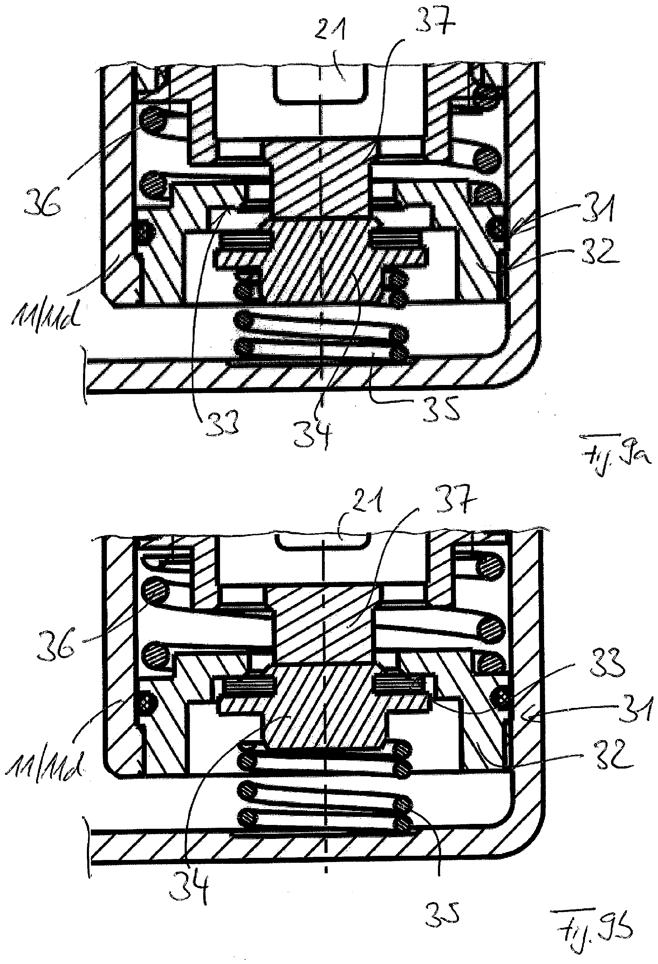

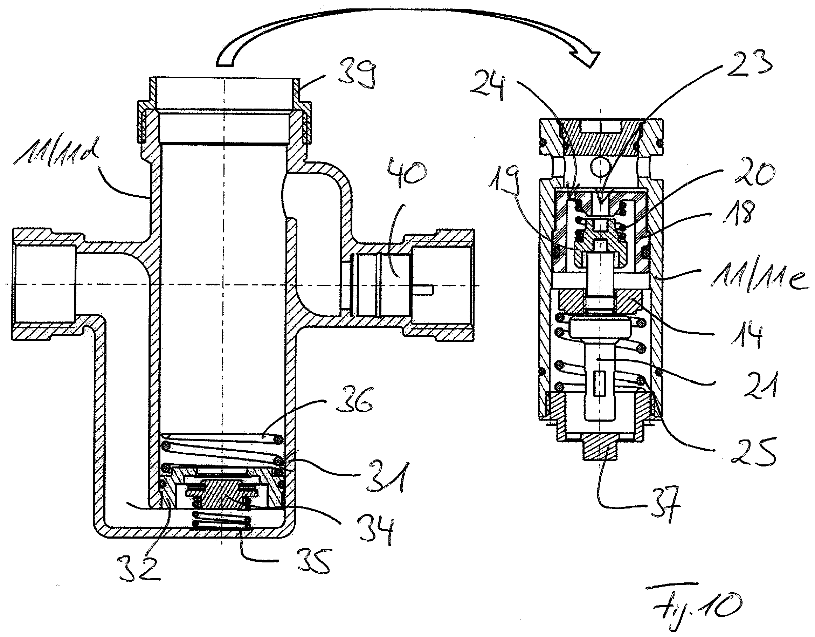

Figure 8 shows a cross sectional view of a regulation valve 10' according to a second preferred embodiment of the invention, whereby Figures 9, 10a, 10b each show details of said regulation valve 10'. The regulation vale 10' is preferably used for under plastering applications in a vertical installation direction.

The regulation valve 10 comprises a valve housing 11. The valve housing 11 provides a valve inlet chamber 12 for the liquid medium and a valve outlet chamber 13 for the liquid medium. The valve housing 11 shown in the embodiment of Figure 1 comprises a middle main section 11a and lateral connecting sections 11b, 11c being mounted together. The middle main section 11a of the valve housing 11 has a first end to which a first lateral connecting section 11b is mounted, preferably screwed, and a second end to which a second lateral connection section 11c carrying a shut-off element 27 is mounted, preferably screwed. The valve inlet chamber 12 is provided by the main section 11a and the first connecting section 11b. The valve outlet chamber 13 is provided by the main section 11a and the second connecting section 11b. The regulation valve is connectable to a circulation system through the connecting sections 11b, 11c.

The regulation valve 10 comprises a valve insert being positioned within said valve housing 11, namely with the main section 11a of the valve housing 11. Said valve insert comprise a valve body 18, a valve plunger 19 and a first spring element 20. The first spring element 20 is positioned between the valve body 18 and the valve plunger 19 and acts on the valve body 18 and the valve plunger 19.

Said valve body 18 separates the inlet chamber 12 from the outlet chamber 13 and provides a valve seat 21 for said valve plunger 19. Said first spring element 20 provides a first spring force which tends to lift up said valve plunger 19 from said valve seat 21.

The regulation valve 10 further comprises a thermo element 22 being positioned directly in the flow of the liquid medium, namely in the embodiment of Figure 1 directly within the valve inlet chamber 12 of the regulation valve 10. Said thermo element 22 provides a thermo element force depending on the temperature of the liquid medium within the valve housing 11, namely in the embodiment of Figure 1 within the valve inlet chamber 12. Said thermo element 22 is carrying said valve plunger 19 and is acting on the valve plunger 19. Said thermo element force provided by said thermo element 22 is acting against the first spring force provided by said first spring element 20 and thereby tends to press said valve plunger 19 against said valve 21. Said thermo element force provided by said thermo element 22 increases when the temperature of the liquid medium within the valve housing 11, namely in the embodiment of Figure 1 within the valve inlet chamber 12, increases.

Said thermo element 22 acts together with the valve plunger 19 and the first spring element 20 in such a way that at relative low temperatures of the liquid medium within the valve housing 11 the valve plunger 19 is lifted up from the valve seat 21 by the first spring force being larger than the thermo element force thereby providing a relative high flow rate of the liquid medium through the control valve 10.

At relative high temperatures of the liquid medium within the valve housing 11 the valve plunger 19 is pressed against the valve seat 21 by the thermo element force being larger than the first spring force thereby providing a relative low flow rate of the liquid medium through the control valve 10. Said relative low flow rate is also often called minimum flow rate.

The thermo element 22 is positioned directly in the flow of the liquid medium. This allows a quick and accurate reaction on a changing temperature of the liquid medium and therefore an accurate regulation of the flow rate of the liquid medium through the regulation valve 10 depending on the temperature of the liquid medium.

Said valve body 10 provides at least one relative large opening 23 being surrounded by the valve seat 21 which is opened when said valve plunger 19 is lifted up from said valve seat 21 at relative low temperatures of the liquid medium thereby providing the relative high flow rate. The or each relative large opening 23 is at least partially closed when said valve plunger 19 is pressed against said valve seat 21 at relative high temperatures of the liquid medium thereby providing the relative low flow rate.

In the embodiment of Figure 1 (see especially Figures 2a, 2b), the or each relative large opening 23 of the valve body 18 is completely closed when said valve plunger 19 is pressed against said valve seat 21, whereby the relative low flow rate or minimum flow rate through the control rate is provided by at least one additional, relative small opening 24 within the valve body 18. The or each additional, relative small opening 24 within the valve body 18 is not surrounded by said valve seat 21 and is also opened when said valve plunger 19 is pressed against said valve seat 21 thereby providing a highly accurate relative low flow rate. The or each additional, relative small opening 24 can be manufactured very precisely and the flow through the same does not depend on any other tolerances of the regulation valve 10.

In the alternative of Figures 3a, 3b, a different valve plunger 19 and a different valve body 18 are used. The valve body 18 of Figures 3a and 3b comprises only the or each opening 23 known from Figures 1, 2a and 2b. In Figures 3a and 3b, the or each relative large opening 23 is partially closed when said valve plunger 19 is pressed against said valve seat 21, whereby the relative low flow rate is provided by at least one opening 30 within the valve plunger 19 being in connection with the or each relative large opening 23 of the valve body 18 when the valve plunger 19 is pressed against said valve seat 21. The or each opening 30 is smaller than the or each opening 23 thereby providing the relative low flow rate of the liquid medium through the control valve.

The regulation valve 10 further comprises a mounting support 14 carrying said thermo element 22, whereby a subassembly comprising said mounting support 14, said thermo element 22 and said valve plunger 19 is mounted within an opening 15 of said valve housing 11, namely of the main section 11b of the valve housing 11. The mounting support 14 separates the valve inlet chamber 12 into two sub-chambers, namely into a first inlet sub-chamber 12a and a second inlet sub-chamber 12b.

The second valve inlet sub-chamber 12b in positioned between the first valve inlet sub-chamber 12a and the valve outlet chamber 13.

The mounting support 14 allows a precise pre-assembling of a subassembly comprising said mounting support 14, said thermo element 22 and said valve plunger 19 outside the valve housing 11. The subassembly comprising said mounting support 14, said thermo element 22 and said valve plunger 19 can be easily installed into the valve housing 11. Further on, the subassembly can easily be removed from the valve housing 11 after the lateral connection section 11b has been unscrewed from the middle main section 11a.

Said mounting support 14 is provided by a disc-like or plate like element having a central opening 16 carrying a section of said thermo element 22, said disc-like or plate like element having an outer surface 17 that allows a flow of said liquid medium across said mounting support 14, namely from the first valve inlet sub-chamber 12a into the second valve inlet sub-chamber 12b.

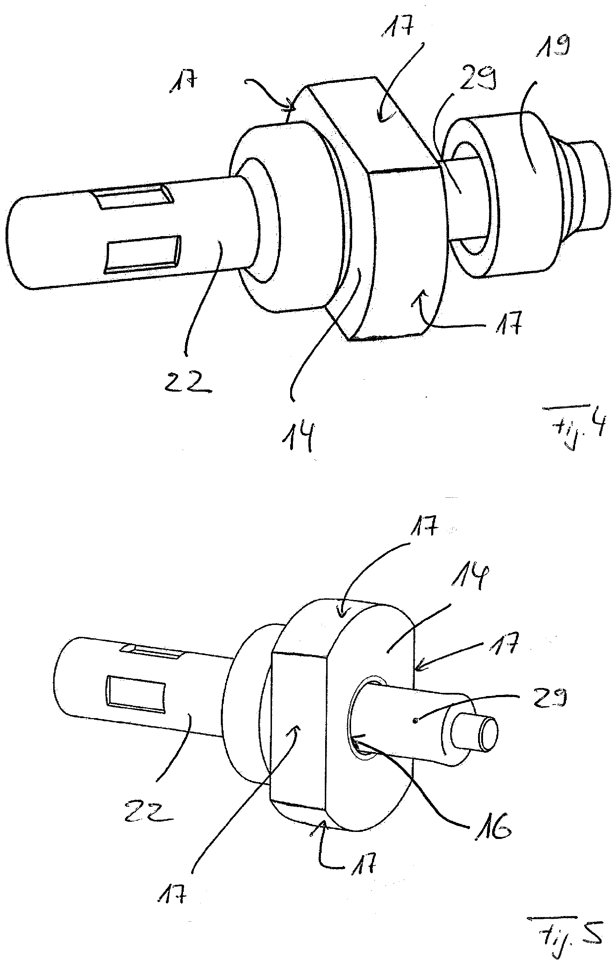

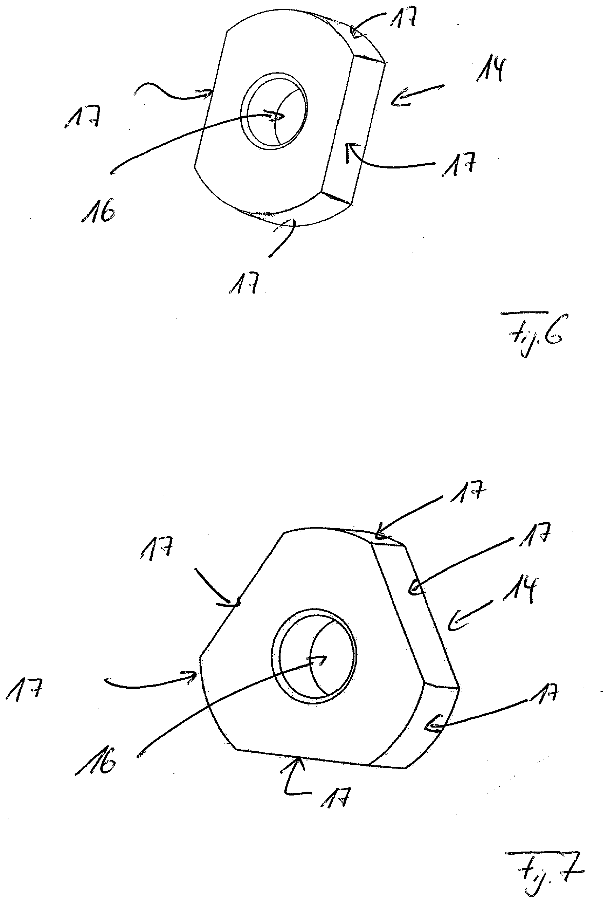

The mounting support 14 shown in Figures 4 to 6 comprises two sections of the outer surface 17 allowing the flow of said liquid medium across said mounting support 14 from inlet sub-chamber 12a and a second inlet sub-chamber 12b. The alternative mounting support 14 shown in Figure 7 comprises three sections of the outer surface 17 allowing the flow of said liquid medium across said mounting support 14 from inlet sub-chamber 12a and a second inlet sub-chamber 12b. The number and/or shape of said surface sections of the outer surface 17 which provided by cut-outs depends on the desired flow rate of said liquid medium across said mounting support 14 from inlet sub-chamber 12a and a second inlet sub-chamber 12b.

As shown in Figures 4 to 6, the central opening 16 of said mounting support 14 carries a section of said thermo element 22. Another section of said thermo element 22 carries said valve plunger 19. A jacket 29 preferably made from a rubber material surrounds another section of said thermo element 22 extending between said mounting support 14 and said valve plunger 19.

The regulation valve 10 further comprises a second spring element 25 being positioned in the first valve inlet sub-chamber 12a. The second spring element 25 acts on the mounting support 14 in such a way that the second spring element 25 provides a second spring force which presses the mounting support 14 against a stroke 26 provided by the valve housing 11, namely in the opening 15 of the main section 11a of the main housing 11.

A first end of the second spring element 25 contacts the mounting support 14 and a second end of the second spring element 25 contacts a section of the valve housing 11. The second end of the second spring element 25 contacts the first connecting section 11b of the valve housing 11. The second spring force provided by the second spring element 25 presses the mounting support 14 against the stroke 26 provided by the main section 11a of the main housing 11 independently from the temperature of the liquid medium. In addition, the valve body 18 of the valve insert is pressed against an additional stroke 28 provided by the by the main section 11a of the main housing 11 independently from the temperature of the liquid medium. Neither the mounting support 14 nor the valve body 18 move during operation of the regulation valve 10 so that there is no risk that the same become blocked by containments of the liquid medium.

Due to the features that the second spring element 25 is positioned in the first valve inlet sub-chamber 12a and that the second spring element 25 acts on the mounting support 14 in such a way that the second spring element 25 provides a second spring force which tends to press the mounting support 14 against the stroke 26 provided by the valve housing 11, the operating pressure of the regulation valve 10 needs not to be taken in consideration for sizing the second spring element 25. The second spring element does not need to act on the valve body against the thermo element force and the operating pressure. This makes it possible to use an inexpensive second spring element 25 having a large tolerance with respect to the second spring force provided by the same. A further advantage of these features is that the valve body 18, the first spring element 20, the second spring element 25 and the subassembly comprising the mounting support 14, the thermo element 22 and the valve plunger 19 of the can easily be positioned in and removed from the valve housing 11, namely from the main section 11a of the main housing 11 when the first connection section 11b from valve housing 11 is disassembled from the main section 11a.

The valve body 18 of the valve insert is preferably made from a plastics material. This has the advantage that the same is resistant to corrosion which may be caused by cavitations in the liquid medium.

The regulation valve 10 described with reference to Figures 1 to 7 is preferably used for over plastering applications in a horizontal installation direction. Figures 8 to 10b show details of regulation valve 10' preferably used for under plastering applications in a vertical installation direction.

The differences between the regulation valve 10 and 10' are described below. For all elements of regulation valve 10' having the same reference signs like the regulation valve 10, reference is made to the description above.

The valve housing 11 of the regulation valve 10' comprises an outer connection section 11d and an inner main section 11 e. The inner main section 11e receives the valve body 18, the first spring element 20, the second spring element 25 and the subassembly comprising the mounting support 14, the thermo element 22 and the valve plunger 19 and thereby the valve insert. The outer connection section 11d receives the inner main section 11e as a cartridge.

The valve inlet chamber 12 and the valve outlet chamber 13 are both provided by the connection section 11d and the main section 11 e. The regulation valve 10' is connectable to a circulation system through the connection section 11d. As mentioned above, for details relating to the valve body 18, to the first spring element 20, to the second spring element 25 and to the subassembly comprising the mounting support 14, the thermo element 22 and the valve plunger 19 reference is made to the description relating to the regulation valve 10.

A first shut-off element 31 is positioned within a section of the first valve inlet sub-chamber 12a provided by the connection section 11d of the valve housing 11, whereby the first shut-off element 31 is automatically closed when the main section 11e together with the valve insert is removed from the outer connection section 11d, and whereby the first shut-off element 31 is opened or closed when the main section 11e together with the valve insert is positioned in the connection section 11d.

The first shut-off element 31 comprises a valve body 32 providing a valve seat 33, a valve plunger 34, a third spring element 35 and a fourth spring element 36. A first end of the third spring element 35 contacts the valve plunger 34 of the first shut-off element 31 and a second end of the third spring element 35 contacts the outer connection section 11d of the valve housing 11 in such a way that a third spring force provided by the third spring element 35 tends to press the valve plunger 34 of first shut-off element 31 against the valve seat 33 provided by the valve body 32 of the same. The third spring force thereby tends to close the first shut-off element 31.

A first end of the fourth spring element 36 contacts the valve body 32 of the first shut-off element 31 and a second end of the fourth spring element 36 contacts the inner main section 11e of the valve housing 11 in such a way that a fourth spring force provided by the fourth spring element 36 tends to press the main section 11e of the valve housing 11 together with the valve insert away from the valve body 32 of the first shut-off element 31.

The regulation valve 10' comprises a screw element 38 providing a force on the main section 11e when the same is positioned in the connection section 11d, whereby the force provided by the screw element 38 influences if the first shut-off element 31 is opened or closed when the main section 11e is positioned in the connection section 11d.

The inner main section 11e of the valve housing 11 comprises a protrusion 37. The protrusion 37 acts together with the valve plunger 34 of the first shut-off element 31. When the inner main section 11e of the valve housing 11 is positioned in the outer connection section 11d of the valve housing 11, the protrusion 37 is pressed against the valve plunger 34 of the first shut-off element 31.

The force with which the protrusion 37 is pressed against the valve plunger 34 is determined by the force provided by the screw element 38. This force provided by the screw element 38 is acting against the third spring force provided by the third spring element 35 and the fourth spring force provided by the third fourth element 36.

When the inner main section 11e is positioned in the outer connection section 11d and when the force provided by the screw element 38 is larger than sum of the third spring force provided by the third spring element 35 and the fourth spring force provided by the fourth spring element 36, the protrusion 37 lifts up the valve plunger 34 from the valve seat 33 thereby opening first shut-off element 31 (see Figure 9a).

The first shut-off element 31 is closed (see Figure 9b) when the force provided by the screw element 38 is smaller than sum of the third spring force provided by the third spring element 35 and the fourth spring force provided by the fourth spring element 36.

When the screw element 38 is screwed up thereby reducing the force provided by the screw element 38, the fourth spring element 36 automatically presses the main section 11e away from the valve body 32 thereby reducing the force applied by the protrusion 37 on the valve plunger 34 of the first shut-off element 31 so that the third spring element 36 automatically closes the first shut-off element 31 by pressing the valve plunger 34 against the valve seat 33.

A tube 39 protects the regulation valve 11', especially the screw element 38, against dirt during the installation and operation of the regulation valve 11'.

A second shut-off element 40 being a back flow preventer is positioned within a section of the valve outlet chamber 13 provided by the connection section 11d of the valve housing 11 in order to prevent back flow leakage.

As shown in Figure 10, the inner main section 11e of the valve housing 11 including the valve body 18, the first spring element 20, the second spring element 25 and the sub-assembly comprising the mounting support 14, the thermo element 22 and the valve plunger 19 and thereby the valve insert can be removed from the outer connection section 11d of the valve housing 11 like a cartridge. In order to remove that cartridge from the outer connection section 11d of the valve housing 11 the screw element 38 is screwed fully up. The fourth spring element 36 together with the third spring element 35 lift up the cartridge and the first shut-off element 31 becomes automatically closed by the fact that the third spring element 35 presses the valve plunger 34 of the first shut-off element 31 against the valve seat 33 of the same.

After the first shut-off element 31 is closed, the fourth spring element 36 continues to lift up the cartridge so that the same can be easily removed from the outer connection section 11d of the valve housing 11. The second shut-off element 40 prevents a back flow to the regulation valve 10, so there is no leakage from the output after the cartridge composed of the inner main section 11e, the valve body 18, the first spring element 20, the second spring element 25, the mounting support 14, the thermo element 22 and the valve plunger 19 is removed from the outer connection section 11d of the valve housing 11.

### List of reference signs

- 10: regulation valve
- 10': regulation valve
- 11: valve housing
- 11a: main section of valve housing
- 11b: first connecting section of valve housing
- 11c: second connecting section of valve housing
- 11d: outer section of valve housing
- 11e: inner section of valve housing
- 12: valve inlet chamber
- 12a: first valve inlet sub-chamber
- 12b: second valve inlet sub-chamber
- 13: valve outlet chamber
- 14: mounting support
- 15: opening
- 16: opening
- 17: surface
- 18: valve body
- 19: valve plunger
- 20: first spring element
- 21: valve seat
- 22: thermo element
- 23: relative large opening within the valve body
- 24: relative small opening within the valve body
- 25: second spring element
- 26: stroke
- 27: shut-off element
- 28: stroke
- 29: jacket
- 30: opening within the valve plunger
- 31: first shut-off element
- 32: valve body
- 33: valve seat
- 34: valve plunger
- 35: third spring element
- 36: fourth spring element
- 37: protrusion
- 38: screw element
- 39: tube
- 40: second shut-off element

## Claims

1. Regulation valve for a liquid medium, especially for drinking water, comprising:
a valve housing (11) providing a valve inlet chamber (12) and a valve outlet chamber (13);
a valve insert being positioned within the valve housing (11), the valve insert comprising a valve plunger (19) and a first spring element (20), whereby the valve plunger (19) acts together with a valve seat (21), and whereby the first spring element (20) provides a first spring force which tends to lift up the valve plunger (19) from the valve seat (21);
a thermo element (22) being positioned directly in the flow of the liquid medium and carrying the valve plunger (19), the thermo element (22) provides a thermo element force acting on the valve plunger (19) depending on the temperature of the liquid medium within the valve housing (11), whereby the thermo element force provided by the thermo element (22) is acting against the first spring force provided by the first spring element (20) and thereby tends to press said valve plunger (19) against the valve seat (21);
a mounting support (14) for the thermo element (22), the mounting support (14) dividing the valve inlet chamber (12) of the valve housing (11) in a first valve inlet sub-chamber (12a) and a second valve inlet sub-chamber (12b), whereby the second valve inlet sub-chamber (12b) is positioned between the first valve inlet sub-chamber (12a) and the valve outlet chamber (13);
a second spring element (25) being positioned in the first valve inlet sub-chamber (12a) and acting on the mounting support (14) in such a way that the second spring element (25) provides a second spring force which presses the mounting support against a stroke (26) provided by the valve housing (11), wherein a first end of the second spring element (25) contacts the mounting support (14) and wherein a second end of the second spring element (25) contacts a section of the valve housing (11) so that the second spring (25) presses the mounting support (14) against the stroke (26) provided by the valve housing (11);
**characterized in that**
the valve insert comprises a valve body (18),
wherein the first spring element (20) is positioned between the valve body (18) and the valve plunger (19), and
wherein the valve body (18) provides the valve seat (21) for the valve plunger (19);
the valve housing (11) comprises an outer connection section (11d) and an inner main section (11e),
wherein the main section (11e) receives the valve insert,
wherein the connection section (11d) receives the main section (11e) as a cartridge,
wherein the valve inlet chamber (12) and the valve outlet chamber (13) are both provided by the connection section (11d) and the main section (11e), and
wherein the regulation valve is connectable to a circulation system through the connection section (11d),
a first shut-off element (31) is positioned within a section of the first valve inlet sub-chamber (12a) provided by the connection section (11d) of the valve housing (11),
wherein the first shut-off element (31) is closed when the main section (11e) together with the valve insert is removed from the outer connection section (11d), and
wherein the first shut-off element (31) is opened or closed when the main section (11e) together with the valve insert is positioned in the connection section (11d),
a screw element (38) providing a force on the main section (11e) when the same is positioned in the connection section (11d),
wherein the force provided by the screw element (38) influences if the first shut-off element (31) is opened or closed when the main section is positioned in the connection section.

2. Regulation valve as claimed in claim 1, **characterized in that** the mounting support (14) is provided by a disc-like or plate-like element having a central opening (16) carrying a section of the thermo element (22), whereby the mounting support (14), the thermo element (22) and the valve plunger (19) provide a sub-assembly being positioned within the valve housing (11).

3. Regulation valve as claimed in claim 1 or 2, **characterized in that** the mounting support (14) has an outer surface (17) allowing a flow of the liquid medium across the mounting support (14) from the first valve inlet sub-chamber (12a) into the second valve inlet sub-chamber (12b).

4. Regulation valve as claimed in one of claim 1 to 3, **characterized in that** the thermo element (22) acts together with the valve plunger (19) and the first spring element (20) in such a way that at relative low temperatures of the liquid medium the valve plunger (19) is lifted up from the valve seat (21) by the first spring force being larger than the thermo element force thereby providing a relative high flow rate of the liquid medium, and that at relative high temperatures of the liquid medium the valve plunger (19) is pressed against the valve seat (21) by the thermo element force being larger than the first spring force thereby providing a relative low flow rate of the liquid medium.

5. Regulation valve as claimed in one of claims 1 to 4, **characterized in that** the valve body (18) provides at least one relative large opening (23) being surrounded by the valve seat (21) which is opened when the valve plunger (19) is lifted up from the valve seat (21) at relative low temperatures of the liquid medium thereby providing the relative high flow rate and which is completely closed when the valve plunger (19) is pressed against the valve seat (21) at relative high temperatures of the liquid medium, whereby the valve body (18) provides at least one additional, relative small opening (24) within the valve body (18) being not surrounded by the valve seat (21) which is also opened when the valve plunger (19) is pressed against the valve seat (21) thereby providing a highly accurate relative low flow rate.

6. Regulation valve as claimed in one of claims 1 to 4, **characterized in that** the valve body (18) provides at least one relative large opening (23) being surrounded by the valve seat (21) which provides the relative high flow rate when the valve plunger is lifted up from the valve seat at relative low temperatures of the liquid medium, whereby the relative low flow rate is provided by at least one opening (30) within the valve plunger being in connection with the at least one relative large opening (23) of the valve body when the valve plunger is pressed against the valve seat at relative high temperatures of the liquid medium.

7. Regulation valve as claimed in one of claims 1 to 6, **characterized in that** the first shut-off element (31) comprises a valve body (32) providing a valve seat (33), a valve plunger (34), a third spring element (35) and a fourth spring element (36), whereby a first end of the third spring element (35) contacts the valve plunger (34) of the first shut-off element (31) and a second end of the third spring element (35) contacts the outer connection section (11d) of the valve housing in such a way that a third spring force provided by the third spring element (35) tends to press the valve plunger (34) of first shut-off element (31) against the valve seat (33) provided by the valve body (32) of the same, and whereby a first end of the fourth spring element (36) contacts the valve body (32) of the first shut-off element (31) and a second end of the fourth spring element (36) contacts the inner main section (11e) of the valve housing in such a way that a fourth spring force provided by the fourth spring element (36) tends to press the main section (11d) of the valve housing away from the valve body (32) of the first shut-off element (31).

8. Regulation valve as claimed in claim 7, **characterized in that** the inner main section (11e) of the valve housing (11) comprises a protrusion (37) acting on the valve plunger (34) of the first shut-off element (31) in such a way that when the inner main section (11e) is positioned in the outer connection section (11d) and when the force provided by the screw element (38) is larger than sum of the third spring force provided by the third spring element (35) and the fourth spring force provided by the fourth spring element (36) the protrusion (37) lifts up the valve plunger (34) from the valve seat (33) thereby opening first shut-off element (31), whereby the first shut-off element (31) is closed when the force provided by the screw element (38) is smaller than sum of the third spring force provided by the third spring element (35) and the fourth spring force provided by the fourth spring element (36).

9. Regulation valve as claimed in one of claims 1 to 8, **characterized in that** a second shut-off element (40) being a back flow preventer is positioned within a section of the valve outlet chamber (13) provided by the connection section (11d) of the valve housing (11).

10. Regulation valve as claimed in one of claims 1 to 9, **characterized in that** the valve body (18) of the valve insert is preferably made from a plastics material.

## Patentansprüche

1. Regulierventil für ein flüssiges Medium, insbesondere für Trinkwasser, umfassend:
ein Ventilgehäuse (11), das eine Ventileinlasskammer (12) und eine Ventilauslasskammer (13) vorsieht,
einen in dem Ventilgehäuse (11) befindlichen Ventileinsatz, wobei der Ventileinsatz einen Ventilkolben (19) und ein erstes Federelement (20) umfasst, wobei der Ventilkolben (19) mit einem Ventilsitz (21) zusammenwirkt und wobei das erste Federelement (20) eine erste Federkraft bereitstellt, die dafür sorgt, dass der Ventilkolben (19) von dem Ventilsitz (21) abgehoben wird,
ein Thermoelement (22), das sich direkt in dem Strom des flüssigen Mediums befindet und den Ventilkolben (19) trägt, wobei das Thermoelement (22) eine Thermoelementkraft bereitstellt, die abhängig von der Temperatur des flüssigen Mediums in dem Ventilgehäuse (11) auf den Ventilkolben (19) wirkt, wobei die durch das Thermoelement (22) bereitgestellte Thermoelementkraft gegen die durch das erste Federelement (20) bereitgestellte Federkraft wirkt und dadurch dafür sorgt, dass der Ventilkolben (19) gegen den Ventilsitz (21) gepresst wird,
eine Befestigungshalterung (14) für das Thermoelement (22), wobei die Befestigungshalterung (14) die Ventileinlasskammer (12) des Ventilgehäuses (11) in eine erste Ventileinlassteilkammer (12a) und eine zweite Ventileinlassteilkammer (12b) unterteilt, wobei sich die zweite Ventileinlassteilkammer (12b) zwischen der ersten Ventileinlassteilkammer (12a) und der Ventilauslasskammer (13) befindet,
ein zweites Federelement (25), das sich in der ersten Ventileinlassteilkammer (12a) befindet und auf eine solche Weise auf die Befestigungshalterung (14) wirkt, dass das zweite Federelement (25) eine zweite Federkraft bereitstellt, die die Befestigungshalterung gegen einen durch das Ventilgehäuse (11) bereitgestellten Anschlag (26) presst, wobei ein erstes Ende des zweiten Federelements (25) die Befestigungshalterung (14) berührt und wobei ein zweites Ende des zweiten Federelements (25) einen Abschnitt des Ventilgehäuses (11) berührt, so dass die zweite Feder (25) die Befestigungshalterung (14) gegen den durch das Ventilgehäuse (11) bereitgestellten Anschlag (26) presst,
**dadurch gekennzeichnet, dass**
der Ventileinsatz einen Ventilkörper (18) umfasst,
wobei sich das erste Federelement (20) zwischen dem Ventilkörper (18) und dem Ventilkolben (19) befindet, und
wobei der Ventilkörper (18) den Ventilsitz (21) für den Ventilkolben (19) bereitstellt,
das Ventilgehäuse (11) einen äußeren Verbindungsabschnitt (11d) und einen inneren Hauptabschnitt (11e) umfasst,
wobei der Hauptabschnitt (11e) den Ventileinsatz aufnimmt,
wobei der Verbindungsabschnitt (11d) den Hauptabschnitt (11e) als Einsatz aufnimmt,
wobei die Ventileinlasskammer (12) und die Ventilauslasskammer (13) beide durch den Verbindungsabschnitt (11d) und den Hauptabschnitt (11e) bereitgestellt werden, und
wobei das Regulierventil mit einem Zirkulationssystem durch den Verbindungsabschnitt (11d) verbindbar ist,
sich ein erstes Absperrelement (31) in einem Abschnitt der ersten Ventileinlassteilkammer (12a) befindet, der durch den Verbindungsabschnitt (11d) des Ventilgehäuses (11) bereitgestellt ist,
wobei das erste Absperrelement (31) geschlossen ist, wenn der Hauptabschnitt (11e) zusammen mit dem Ventileinsatz aus dem äußeren Verbindungsabschnitt (11d) entfernt ist, und
wobei das erste Absperrelement (31) geöffnet oder geschlossen ist, wenn sich der Hauptabschnitt (11e) zusammen mit dem Ventileinsatz in dem Verbindungsabschnitt (11d) befindet,
ein Schraubelement (38) eine Kraft auf den Hauptabschnitt (11e) bereitstellt, wenn sich dieser in dem Verbindungsabschnitt (11d) befindet,
wobei die durch das Schraubelement (38) bereitgestellte Kraft beeinflusst, ob das erste Absperrelement (31) geöffnet oder geschlossen wird, wenn sich der Hauptabschnitt in dem Verbindungsabschnitt befindet.

2. Regulierventil nach Anspruch 1, **dadurch gekennzeichnet, dass** die Befestigungshalterung (14) durch ein scheibenartiges oder plattenartiges Element vorgesehen ist, das eine zentrale Öffnung (16) aufweist, die einen Abschnitt des Thermoelements (22) trägt, wobei die Befestigungshalterung (14), das Thermoelement (22) und der Ventilkolben (19) eine Teilanordnung bereitstellen, die sich in dem Ventilgehäuse (11) befindet.

3. Regulierventil nach Anspruch 1 oder 2, **dadurch gekennzeichnet, dass** die Befestigungshalterung (14) eine Außenfläche (17) aufweist, die einen Strom des flüssigen Mediums über die Befestigungshalterung (14) hinweg von der ersten Ventileinlassteilkammer (12a) in die zweite Ventileinlassteilkammer (12b) ermöglicht.

4. Regulierventil nach einem der Ansprüche 1 bis 3, **dadurch gekennzeichnet, dass** das Thermoelement (22) auf eine solche Weise mit dem Ventilkolben (19) und dem ersten Federelement (20) zusammenwirkt, dass bei relativ niedrigen Temperaturen des flüssigen Mediums der Ventilkolben (19) dadurch von dem Ventilsitz (21) abgehoben wird, dass die erste Federkraft größer als die Thermoelementkraft ist, wodurch eine relativ hohe Durchflussrate des flüssigen Mediums bereitgestellt wird, und dass bei relativ hohen Temperaturen des flüssigen Mediums der Ventilkolben (19) dadurch gegen den Ventilsitz (21) gepresst wird, dass die Thermoelementkraft größer als die erste Federkraft ist, wodurch eine relativ niedrige Durchflussrate des flüssigen Mediums bereitgestellt wird.

5. Regulierventil nach einem der Ansprüche 1 bis 4, **dadurch gekennzeichnet, dass** der Ventilkörper (18) wenigstens eine relativ große Öffnung (23) vorsieht, die von dem Ventilsitz (21) umgeben ist und die geöffnet wird, wenn der Ventilkolben (19) bei relativ niedrigen Temperaturen des flüssigen Mediums von dem Ventilsitz (21) abgehoben wird, wodurch die relativ hohe Durchflussrate bereitgestellt wird, und die vollständig geschlossen wird, wenn der Ventilkolben (19) bei relativ hohen Temperaturen des flüssigen Mediums gegen den Ventilsitz (21) gepresst wird, wobei der Ventilkörper (18) wenigstens eine zusätzliche, relativ kleine Öffnung (24) in dem Ventilkörper (18) bereitstellt, die nicht von dem Ventilsitz (21) umgeben ist und die ebenfalls geöffnet ist, wenn der Ventilkolben (19) gegen den Ventilsitz (21) gepresst ist, wodurch eine hochgenaue relativ niedrige Durchflussrate bereitgestellt wird.

6. Regulierventil nach einem der Ansprüche 1 bis 4, **dadurch gekennzeichnet, dass** der Ventilkörper (18) wenigstens eine relativ große Öffnung (23) vorsieht, die von dem Ventilsitz (21) umgeben ist und die eine relativ hohe Durchflussrate bereitstellt, wenn der Ventilkolben bei relativ niedrigen Temperaturen des flüssigen Mediums von dem Ventilsitz abgehoben wird, wobei die relativ niedrige Durchflussrate dadurch bereitgestellt wird, dass wenigstens eine Öffnung (30) in dem Ventilkolben in Verbindung mit der wenigstens einen relativ großen Öffnung (23) des Ventilkörpers steht, wenn der Ventilkolben bei relativ hohen Temperaturen des flüssigen Mediums gegen den Ventilsitz gepresst wird.

7. Regulierventil nach einem der Ansprüche 1 bis 6, **dadurch gekennzeichnet, dass** das erste Absperrelement (31) einen Ventilkörper (32), der einen Ventilsitz (33) bereitstellt, einen Ventilkolben (34), ein drittes Federelement (35) und ein viertes Federelement (36) umfasst, wobei ein erstes Ende des dritten Federelements (35) den Ventilkolben (34) des ersten Absperrelements (31) berührt und ein zweites Ende des dritten Federelements (35) den äußeren Verbindungsabschnitt (11d) des Ventilgehäuses auf eine solche Weise berührt, dass eine durch das dritte Federelement (35) bereitgestellte dritte Federkraft dafür sorgt, dass der Ventilkolben (34) des ersten Absperrelements (31) gegen den durch den Ventilkörper (32) desselben bereitgestellten Ventilsitz (33) gepresst wird, und wobei ein erstes Ende des vierten Federelements (36) den Ventilkörper (32) des ersten Absperrelements (31) berührt und ein zweites Ende des vierten Federelements (36) den inneren Hauptabschnitt (11e) des Ventilgehäuses auf eine solche Weise berührt, dass eine durch das vierte Federelement (36) bereitgestellte vierte Federkraft dafür sorgt, dass der Hauptabschnitt (11d) des Ventilgehäuses weg von dem Ventilkörper (32) des ersten Absperrelements (31) gepresst wird.

8. Regulierventil nach Anspruch 7, **dadurch gekennzeichnet, dass** der innere Hauptabschnitt (11e) des Ventilgehäuses (11) einen Vorsprung (37) umfasst, der auf eine solche Weise auf den Ventilkolben (34) des ersten Absperrelements (31) wirkt, dass, wenn sich der innere Hauptabschnitt (11e) in dem äußeren Verbindungsabschnitt (11d) befindet und wenn die durch das Schraubelement (38) bereitgestellte Kraft größer als die Summe der durch das dritte Federelement (35) bereitgestellten dritten Federkraft und der durch das vierte Federelement (36) bereitgestellten vierten Federkraft ist, der Vorsprung (37) den Ventilkolben (34) von dem Ventilsitz (33) abhebt und dadurch das erste Absperrelement (31) öffnet, wobei das erste Absperrelement (31) geschlossen wird, wenn die durch das Schraubelement (38) bereitgestellte Kraft geringer als die Summe der durch das dritte Federelement (35) bereitgestellten dritten Federkraft und der durch das vierte Federelement (36) bereitgestellten vierten Federkraft ist.

9. Regulierventil nach einem der Ansprüche 1 bis 8, **dadurch gekennzeichnet, dass** sich ein zweites Absperrelement (40), bei dem es sich um einen Rückflussverhinderer handelt, in einem Abschnitt der Ventilauslasskammer (13) befindet, der durch den Verbindungsabschnitt (11d) des Ventilgehäuses (11) bereitgestellt wird.

10. Regulierventil nach einem der Ansprüche 1 bis 9, **dadurch gekennzeichnet, dass** der Ventilkörper (18) des Ventileinsatzes vorzugsweise aus einem Kunststoffmaterial hergestellt ist.

## Revendications

1. Vanne de régulation pour un milieu liquide, en particulier pour l'eau potable, comprenant :
un boîtier de vanne (11) fournissant une chambre d'entrée de vanne (12) et une chambre de sortie de vanne (13) ;
un insert de vanne positionné à l'intérieur du boîtier de vanne (11), l'insert de vanne comprenant un piston de vanne (19) et un premier élément ressort (20), le piston de vanne (19) agissant conjointement avec un siège de vanne (21), et le premier élément ressort (20) fournissant une première force de ressort qui tend à soulever le piston de vanne (19) du siège de vanne (21) ;
un élément thermique (22) positionné directement dans l'écoulement du milieu liquide et portant le piston de vanne (19), l'élément thermique (22) fournissant une force d'élément thermique agissant sur le piston de vanne (19) en fonction de la température du milieu liquide à l'intérieur du boîtier de vanne (11), la force d'élément thermique fournie par l'élément thermique (22) agissant contre la première force de ressort fournie par le premier élément ressort (20) et tendant ainsi à presser ledit piston de vanne (19) contre le siège de vanne (21) ;
un support de montage (14) pour l'élément thermique (22), le support de montage (14) divisant la chambre d'entrée de vanne (12) du boîtier de vanne (11) dans une première sous-chambre d'entrée de vanne (12a) et une seconde sous-chambre d'entrée de vanne (12b), la seconde sous-chambre d'entrée de vanne (12b) étant positionnée entre la première sous-chambre d'entrée de vanne (12a) et la chambre de sortie de vanne (13) ;
un deuxième élément ressort (25) positionné dans la première sous-chambre d'entrée de vanne (12a) et agissant sur le support de montage (14) de sorte que le deuxième élément ressort (25) fournisse une deuxième force de ressort qui presse le support de montage contre une course (26) fournie par le boîtier de vanne (11), une première extrémité du deuxième élément ressort (25) venant en contact avec le support de montage (14) et une seconde extrémité du deuxième élément ressort (25) venant en contact avec une section du boîtier de vanne (11) de sorte que le second ressort (25) presse le support de montage (14) contre la course (26) fournie par le boîtier de vanne (11) ;
**caractérisée en ce que**
l'insert de vanne comprend un corps de vanne (18),
le premier élément ressort (20) étant positionné entre le corps de vanne (18) et le piston de vanne (19), et
le corps de vanne (18) fournissant le siège de vanne (21) pour le piston de vanne (19) ;
le boîtier de vanne (11) comprenant une section de liaison externe (11d) et une section principale interne (11e),
la section principale (11e) recevant l'insert de vanne,
la section de liaison (11d) recevant la section principale (11e) sous forme de cartouche,
la chambre d'entrée de vanne (12) et la chambre de sortie de vanne (13) étant toutes deux fournies par la section de liaison (11d) et la section principale (11e), et
la vanne de régulation pouvant être reliée à un système de circulation par l'intermédiaire de la section de liaison (11d),
un premier élément d'arrêt (31) étant positionné dans une section de la première sous-chambre d'entrée de vanne (12a) fournie par la section de liaison (11d) du boîtier de vanne (11),
le premier élément d'arrêt (31) étant fermé lorsque la section principale (11e) et l'insert de vanne sont retirés de la section de liaison externe (11d), et
le premier élément d'arrêt (31) étant ouvert ou fermé lorsque la section principale (11e) avec l'insert de vanne est positionnée dans la section de liaison (11d),
un élément à vis (38) fournissant une force sur la section principale (11e) lorsque celle-ci est positionnée dans la section de liaison (11d),
la force fournie par l'élément à vis (38) influence si le premier élément d'arrêt (31) est ouvert ou fermé lorsque la section principale est positionnée dans la section de liaison.

2. Vanne de régulation selon la revendication 1, **caractérisée en ce que** le support de montage (14) est fourni par un élément en forme de disque ou de plaque ayant une ouverture centrale (16) portant une section de l'élément thermique (22), le support de montage (14), l'élément thermique (22) et le piston de vanne (19) constituant un sous-ensemble positionné à l'intérieur du boîtier de vanne (11).

3. Vanne de régulation selon la revendication 1 ou 2, **caractérisée en ce que** le support de montage (14) a une surface externe (17) permettant un écoulement du milieu liquide à travers le support de montage (14) à partir de la première sous-chambre d'entrée de vanne (12a) dans la seconde sous-chambre d'entrée de vanne (12b).

4. Vanne de régulation selon l'une des revendications 1 à 3, **caractérisée en ce que** l'élément thermique (22) agit conjointement avec le piston de vanne (19) et le premier élément ressort (20) de sorte qu'à des températures relativement basses du milieu liquide, le piston de vanne (19) soit soulevé du siège de vanne (21) par le fait que la première force de ressort est supérieure à la force de l'élément thermique, fournissant ainsi un débit relativement élevé du milieu liquide, et **en ce qu'**à des températures relativement élevées du milieu liquide, le piston de vanne (19) soit pressé contre le siège de vanne (21) par le fait que la force de l'élément thermique est supérieure à la première force de ressort, fournissant ainsi un débit relativement faible du milieu liquide.

5. Vanne de régulation selon l'une des revendications 1 à 4, **caractérisée en ce que** le corps de vanne (18) a au moins une ouverture relativement grande (23) entourée par le siège de vanne (21) qui est ouvert lorsque le piston de vanne (19) est soulevé du siège de vanne (21) à des températures relativement basses du milieu liquide, fournissant ainsi un débit relativement élevé et qui est complètement fermé lorsque le piston de vanne (19) est pressé contre le siège de vanne (21) à des températures relativement élevées du milieu liquide, le corps de vanne (18) ayant au moins une ouverture supplémentaire relativement petite (24) à l'intérieur du corps de vanne (18) qui n'est pas entourée par le siège de vanne (21) qui est également ouvert lorsque le piston de vanne (19) est pressé contre le siège de vanne (21), fournissant ainsi un débit relativement faible et très précis.

6. Vanne de régulation selon l'une des revendications 1 à 4, **caractérisée en ce que** le corps de vanne (18) a au moins une ouverture relativement grande (23) entourée par le siège de vanne (21) qui fournit le débit relativement élevé lorsque le piston de vanne est soulevé du siège de vanne à des températures relativement basses du milieu liquide, le débit relativement bas étant assuré par au moins une ouverture (30) à l'intérieur du piston de vanne en liaison avec l'au moins une ouverture relativement grande (23) du corps de vanne lorsque le piston de vanne est pressé contre le siège de vanne à des températures relativement élevées du milieu liquide.

7. Vanne de régulation selon l'une des revendications 1 à 6, **caractérisée en ce que** le premier élément d'arrêt (31) comprend un corps de vanne (32) fournissant un siège de vanne (33), un piston de vanne (34), un troisième élément ressort (35) et un quatrième élément ressort (36), une première extrémité du troisième élément ressort (35) venant en contact avec le piston de vanne (34) du premier élément d'arrêt (31) et une seconde extrémité du troisième élément ressort (35) venant en contact avec la section de liaison externe (11d) du boîtier de vanne de sorte qu'une troisième force de ressort fournie par le troisième élément ressort (35) tende à presser le piston de vanne (34) du premier élément d'arrêt (31) contre le siège de vanne (33) fourni par le corps de vanne (32) de celui-ci, et une première extrémité du quatrième élément ressort (36) venant en contact avec le corps de vanne (32) du premier élément d'arrêt (31) et une seconde extrémité du quatrième élément ressort (36) venant en contact avec la section principale interne (11e) du boîtier de vanne de sorte qu'une quatrième force de ressort fournie par le quatrième élément ressort (36) tende à écarter la section principale (11d) du boîtier de vanne du corps de vanne (32) du premier élément d'arrêt (31).

8. Vanne de régulation selon la revendication 7, **caractérisée en ce que** la section principale interne (11e) du boîtier de vanne (11) comprend une saillie (37) agissant sur le piston de vanne (34) du premier élément d'arrêt (31) de sorte que lorsque la section principale interne (11e) est positionnée dans la section de liaison externe (11d) et lorsque la force fournie par l'élément à vis (38) est supérieure à la somme de la troisième force de ressort fournie par le troisième élément ressort (35) et de la quatrième force de ressort fournie par le quatrième élément ressort (36), la saillie (37) soulève le piston de vanne (34) du siège de vanne (33), ouvrant ainsi le premier élément d'arrêt (31), le premier élément d'arrêt (31) étant fermé lorsque la force fournie par l'élément à vis (38) est inférieure à la somme de la troisième force de ressort fournie par le troisième élément ressort (35) et de la quatrième force de ressort fournie par le quatrième élément ressort (36).

9. Vanne de régulation selon l'une des revendications 1 à 8, **caractérisée en ce qu'**un second élément d'arrêt (40), qui est un dispositif anti-retour, est positionné dans une section de la chambre de sortie de vanne (13) fournie par la section de liaison (11d) du boîtier de vanne (11).

10. Vanne de régulation selon l'une des revendications 1 à 9, **caractérisée en ce que** le corps de vanne (18) de l'insert de vanne est de préférence en matière plastique.
